# Europäisches Patentamt
## European Patent Office
## Office européen des brevets

(19)

(11) Veröffentlichungsnummer : **0 115 804**
**B1**

(12)

# EUROPÄISCHE PATENTSCHRIFT

(45) Veröffentlichungstag der Patentschrift :
25.03.87

(51) Int. Cl.⁴ : **B 29 C 59/06**, B 26 F  1/26

(21) Anmeldenummer : 84100629.9

(22) Anmeldetag : 21.01.84

(54) Verfahren zum Herstellen einer Weichkunststoffolie.

(30) Priorität : 04.02.83 DE 3303836

(43) Veröffentlichungstag der Anmeldung :
15.08.84 Patentblatt 84/33

(45) Bekanntmachung des Hinweises auf die Patenterteilung : 25.03.87 Patentblatt 87/13

(84) Benannte Vertragsstaaten :
**AT BE CH DE FR GB IT LI LU NL SE**

(56) Entgegenhaltungen :
EP-A- 0 008 382
EP-A- 0 059 506
DE-B- 2 409 496
DE-C- 1 071 937
US-A- 2 776 451
US-A- 3 054 148
US-A- 4 211 743
US-A- 4 252 516

(73) Patentinhaber : **UNILEVER NV**
**Burgemeester s'Jacobplein 1 P.O. Box 760**
**NL-3000 DK Rotterdam (NL)**
**AT BE CH DE FR GB IT LI LU NL SE**
**UNILEVER PLC**
**Unilever House Blackfriars P.O. Box 68**
**London EC4P 4BQ (GB)**
**GB**

(72) Erfinder : **Schmidt, Theo**
**Kiefernstrasse 7**
**D-8550 Forchheim (DE)**
Erfinder : **Reinke, Dietmar, Dr.**
**Ringstrasse 50**
**D-8551 Kirchehrenbach (DE)**

(74) Vertreter : **Hutzelmann, Gerhard et al**
**Duracher Strasse 22**
**D-8960 Kempten (DE)**

EP 0 115 804 B1

Jouve, 18, rue St-Denis, 75001 Paris, France

**Beschreibung**

Die Erfindung betrifft ein Verfahren zum Herstellen einer perforierten und vorzugsweise strukturierten Weichkunststoffolie, die im thermoplastischen Zustand von einer Extruderdüse kommend auf einer siebartigen Fläche unter der Einwirkung von pneumatischem Unterdruck perforiert und anschließend abgekühlt wird.

Ein derartiges Verfahren ist aus der EP-A-0059-506 bekannt. Dort wird eine Kunststoffolie auf eine Lochwalze extrudiert und dann mit Hilfe eines Heißluftstrahles perforiert. Die Abnahme der Folie von dieser Lochwalze erfolgt über eine Kühlwalze.

Darüber hinaus ist es aus der DE-A-30 16 568 bekannt, eine bereits fertige Folie über einen mit pneumatischem Unterdruck beaufschlagten Siebzylinder zu leiten und die Folie von der Außenseite mit Heißluft anzublasen und dabei zu perforieren und zu prägen. Vor dem Verlassen des Zylinders wird die Folie noch mit Hilfe von durchgesaugter Luft gekühlt. Es dauert auch bei diesem Verfahren somit verhältnismäßig lang, bis die Kühlung der Folie einsetzt, was für deren Weichheit äußerst nachteilig ist.

Aus der DE-C-24 09 496 ist es bekannt, eine bereits fertige Kunststoffolie unter Einsatz von Vacuum und Heißluft zu perforieren. Dazu wird die Folie über einen Siebzylinder geführt, der an seiner Innenseite eine Saugkammer und dieser gegenüberliegend an seiner Außenseite eine Heißluftdüse aufweist. Hierbei ist besonders nachteilig, daß die Folie vor ihrer Perforierung erst bis in den thermoplastischen Temperaturbereich aufgeheizt werden muß. Dabei ist es besonders schwierig, über die Folienbreite gesehen eine gleichmäßige Temperatur in der Folie zu erzeugen.

Der Erfindung liegt die Aufgabe zugrunde, ein Verfahren zu schaffen, mit dem eine perforierte und vorzugsweise strukturierte Kunststoffolie hergestellt werden kann, die darüber hinaus weich und geschmeidig ist.

Diese Aufgabe wird erfindungsgemäß dadurch gelöst, daß

a) der Unterdruck von außen durch eine Gegenwalze welche die Siebartige Fläche entlang einer Linie berührt steuerbar ist,

b) das Abkühlen gleichzeitig mit dem Perforieren durch eine Kühlung der Gegenwalze und zusätzlich durch einen Luftstrom erfolgt, der durch die beim Perforieren entstehenden Löcher aufgrund des Unterdrucks strömt, wobei der Luftstrom ebenfalls von außen durch die Gegenwalze steuerbar ist.

Durch den pneumatischen Unterdruck wird bereits mit dem Perforieren kalte Luft durch die Öffnungen der Folie gezogen und damit die durch die Gegenwalze schockartig eingeleitete Kühlung der Folie wirkungsvoll unterstützt. Diese schockartige und sehr intensive Kühlung hat eine schnelle Kristallisation des Kunststoffs zur Folge, wodurch wiederum eine weiche, geschmeidige und griffsympathische Folie erhalten wird.

Darüber hinaus ist das erfindungsgemäße Verfahren besonders wirtschaftlich durchzuführen, da keinerlei Aufheizen der Folie notwendig ist.

Auch ist es ohne weiteres auf unterschiedliche Folienmaterialien und unterschiedliche Folienkonditionen einstellbar.

Eine vorteilhafte Ausgestaltung der Erfindung liegt auch darin, daß die Folie wenigstens annähernd in den Spalt zwischen siebartiger Fläche und Gegenwalze extrudiert wird.

Durch dieses praktisch gleichzeitige Perforieren und schockartige Abkühlen der Folie ergeben sich optimale Bedingungen für das Perforieren sowie das Strukturieren und darüber hinaus wird überraschenderweise eine hervorragende Weichheit und Geschmeidigkeit erzielt.

Sehr vorteilhaft ist es auch, wenn erfindungsgemäß die Gegenwalze in Bezug auf den Bereich des pneumatischen Unterdrucks an der siebartigen Fläche verstellbar ist. Dadurch kann der Spalt, in welcher die Perforierung stattfindet, genau eingestellt und den durch die Folienparameter gegebenen Bedingungen, wie z. B. Folienmaterial, Folienstärke, Temperatur und Geschwindigkeit angepaßt werden.

Dieses Einstellen und Anpassen ist auch möglich, wenn erfindungsgemäß der Bereich des pneumatischen Unterdrucks in seiner Lage in Bezug auf die Gegenwalze verstellt werden kann.

Es kann auch sehr günstig sein, wenn gemäß einer weiteren Ausgestaltung der Erfindung die siebartige Fläche mit einer Strukturierung versehen ist und die Folie an dieser Fläche sowohl perforiert als auch strukturiert wird. In diesem Fall dient die Gegenwalze dann im wesentlichen der Steuerung von Perforationsunterdruck, Anpreßdruck für die Strukturierung und der Temperatur. Sie kann aber ebenfalls eine Strukturierung bewirken.

Sehr vorteilhaft ist es auch, wenn erfindungsgemäß an der siebartigen Fläche in Laufrichtung hinter dem pneumatischen Unterdruck ein Bereich mit pneumatischem Überdruck auf der der Folie abgewandten Seite vorgesehen ist.

Dieser pneumatische Überdruck dient in erster Linie der Kühlung der Folie ; er kann dafür allein eingesetzt werden. Er erleichtert darüber hinaus das Abheben der Folie von der siebartigen Fläche.

Im Rahmen der Erfindung ist es aber auch möglich, daß im Bereich des pneumatischen Überdrucks an der Außenseite ein Wasserbad vorgesehen ist, durch welches die perforierte Folie zur ihrer Kühlung läuft. Der pneumatische Überdruck verhindert dabei ein Eindringen von Wasser in wenigstens die siebartige Fläche.

Der pneumatische Überdruck kann aber auch so eingestellt werden, daß auch das Eindringen von Wasser in die Perforationen der Folie Verhindert wird.

Im folgenden wird die Erfindung anhand einiger in der Zeichnung dargestellter Ausführungsbeispiele erläutert. Dabei zeigen :

Figur 1 eine schematische Seitenansicht einer Vorrichtung, mit der eine perforierte und gegebenenfalls strukturierte Kunststoff-Folie nach dem erfindungsgemäßen Verfahren hergestellt werden kann,

Figur 2 eine Teilschnittdarstellung der Perforier-Strukturier-Walze und der Gegenwalze im Bereich der Perforierungssaugkanäle der erstgenannten und des Berührungspunktes der beiden Walzen

Figur 3 eine schematische Darstellung eines anderen Ausführungsbeispiels für das erfindungsgemäße Verfahren und

Figur 4 eine schematische Darstellung eines weiteren Ausführungsbeispiels für das erfindungsgemäße Verfahren, wobei die Kühlung mittels einer neben der Perforier-Strukturier-Walze liegenden Kühlwalze durchgeführt wird.

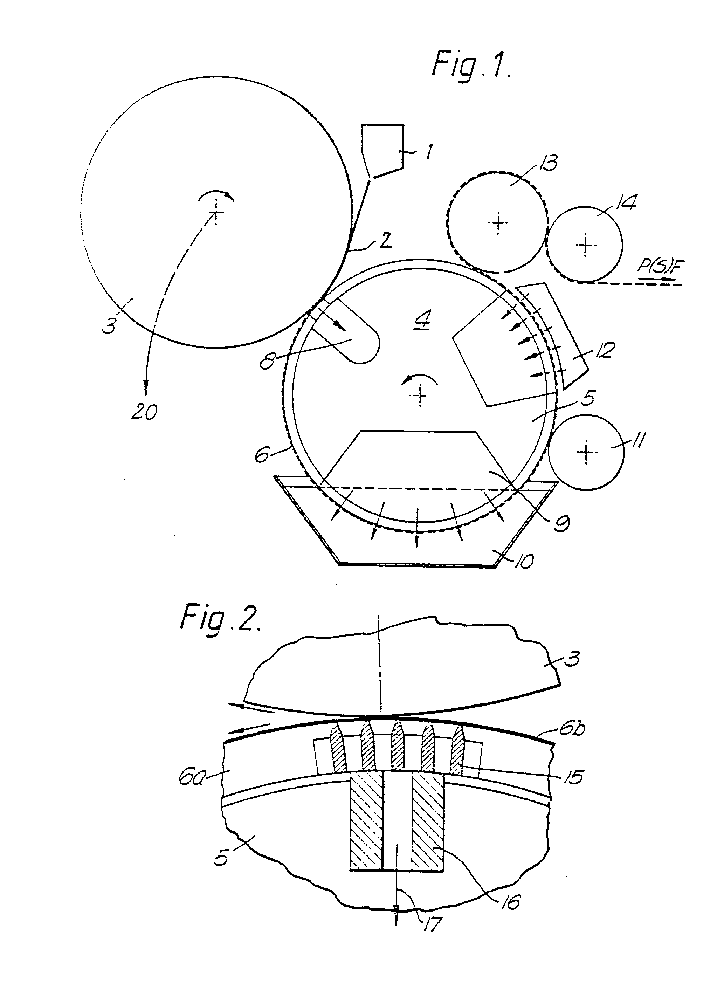

In Fig. 1 wird aus einer Extrusionsvorrichtung 1 eine Schmelze eines Kunststoffes auf die Gegenwalze 3 extrudiert, wobei die Kunststoffolie 2 gebildet wird. Die zu verwendenden Kunststoffe in dem erfindungsgemäßen Verfahren sind z. B. Polyolefine (Homo- und Copolymere), Polyamide, Polyester, usw. Die gebildete Kunststoffolie wird darauf auf die Perforier-Strukturier-Walze 4 geführt, welche aus einem Statorteil 5 und einem Rotorteil 6 besteht. Im Statorteil 5 sind Einrichtungen 8, um die Kunststoffolie einem pneumatischen Unterdruck zu unterwerfen und eine Einrichtung 9, um die Kunststoffolie einem pneumatischen Überdruck zu unterwerfen, vorgesehen. Die Einrichtungen 8 gleiten mit ihren Mündungen, welche mit Abdichtungselementen 16 (s. Fig. 2) versehen sind, über den Rotorteil 6, bestehend aus Sieb 6b und Rotorelementen 6a (s. Fig. 2), welche z. B. auch die stegförmigen Siebträgerelemente 15 umfassen. Die Einrichtungen 8 bestehen aus Vakuumkammern, welche an (nicht dargestellte) Leitungen einer (nicht dargestellten) Vakuumpumpe angeschlossen sind. Durch das angelegte Vakuum wird ein pneumatischer Unterdruck 17 erzeugt (s. Fig. 2).

Die Perforier-Strukturier-Walze 4 ist teilweise in ein Wasserbad 10 eingetaucht und diesem Wasserbad diametral gegenüberliegend ist die Einrichtung 9 in der Perforier-Strukturier-Walze angeordnet. Durch den auftretenden pneumatischen Überdruck wird das Eindringen von Wasser in das Sieb verhindert. Hinter dem Wasserbad 10 ist eine Abrakelwalze 11 vorgesehen. Die zusätzliche Kühlung wird von einem Blassegment 12, mit Unterstützung einer diametral gegenüberliegenden Saugeinrichtung vorgenommen.

Die perforierte, gegebenenfalls strukturierte Kunststofffolie (P(S)F) wird mittels eines S-Abzuges, bestehend aus einer Abnahmewalze (Umlenkrolle) 13 und einer Gummiwalze 14 von der Perforier-Strukturier-Walze 4 abtransportiert.

Aus Fig. 2 ist deutlich ersichtlich, daß die Vakuumwirkung 17 durch die Gegenwalze 3 gesteuert wird. Mittels des Pfeiles 20 ist bei der Gegenwalze 3 angegeben, daß diese in ihrer Position verstellbar ist. Auch die Einrichtung 8, welche zur Perforierung verwendet wird, ist in ihrer Position verstellbar, so daß die Wirkung des Unterdrucks auf die Folienparameter einstellbar ist.

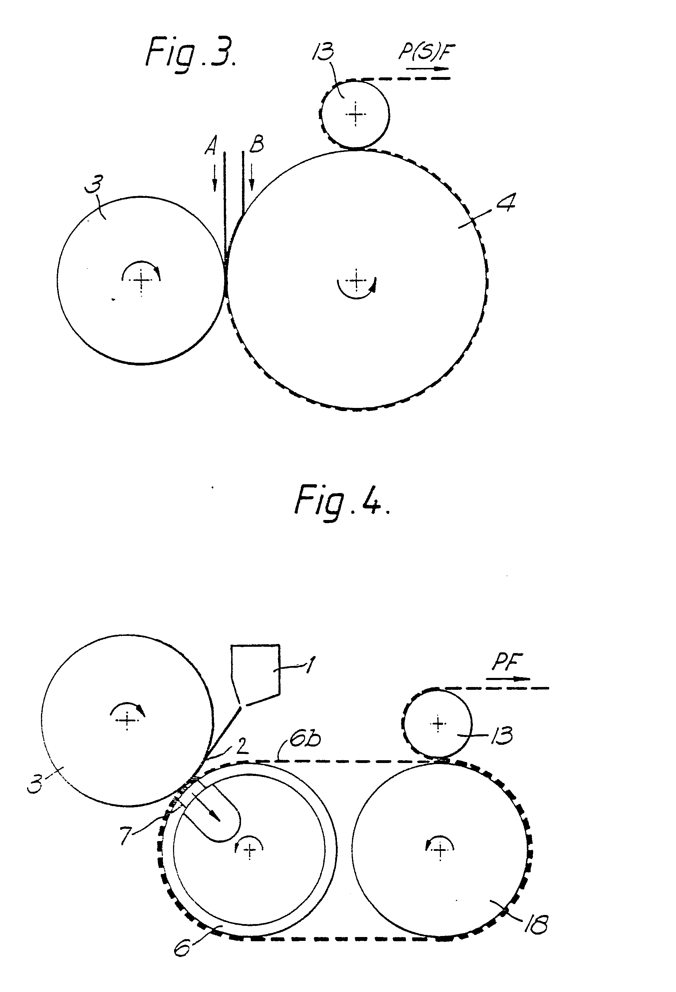

In Fig. 3 ist schematisch ein anderes Ausführungsbeispiel des erfindungsgemäßen Verfahrens dargestellt. Dabei kann die Schmelze aus der Extrusionsvorrichtung entweder unmittelbar in den Spalt zwischen Gegenwalze 3 und Perforier-Strukturier-Walze 4 (angegeben mit Pfeil A) oder auch auf die Perforier-Strukturier-Walze 4 (angegeben mit Pfeil B) extrudiert werden, allerdings auch dann in unmittelbarer Nähe des Spaltes.

In Fig. 4 ist ein Ausführungsbeispiel des erfindungsgemäßen Verfahrens gezeigt, wobei die Kühlung mittels einer, neben der Perforier-Strukturier-Walze 4 liegenden Kühlwalze 18 weiter unterstützt wird. Bei diesem Ausführungsbeispiel besteht die gasdurchlässige Oberfläche aus der rohrförmigen Wand des Rotorteils 6 und einem endlosen Sieb, 6b, welches um die beiden Walzen läuft. In dem wiedergegebenen Ausführungsbeispiel wird die Kunststoffolie nur perforiert (PF). Ein Prägen bzw. Strukturieren könnte aber auch hier an der Gegenwalze 3 oder mit dem Sieb 6b erfolgen.

In einer Vorrichtung, wie in Fig. 1 angegeben, wurde Polyäthylen niedriger Dichte (Dichte 0,92 g/cm$^3$ ; Schmelzindex bei 190 °C/2,16) bei einer Temperatur von 250 °C unmittelbar aus der Schmelze auf die Gegenwalze, unmittelbar in der Nähe des vom Walzenpaar gebildeten Spaltes extrudiert. Die erhaltene Polyäthylenfolie wurde bei 120-180 °C perforiert, dabei schockartig abgekühlt und anschließend mit einem Wasserbad von 15 °C und Blasluft — Unterstützung weiter gekühlt. Es wurde eine perforierte Polyäthylenfolie mit einer Temperatur von 60 °C und einer Dicke von 25 bis 30 Mikron von der Perforier-Walze abtransportiert, die eine sehr gute Weichheit und Geschmeidigkeit aufwies und die sehr griffsympathisch war.

**Patentansprüche**

1. Verfahren zum Herstellen einer perforierten und vorzugsweise strukturierten Weichkunststoffolie, die im thermoplastischen Zustand von einer Extruderdüse (1) kommend auf einer siebartigen Fläche unter der Einwirkung von pneumatischem Unterdruck perforiert und anschließend abgekühlt wird, dadurch gekennzeichnet, daß

a) der Unterdruck von außen durch eine Gegenwalze (3), welche die siebartige Fläche entlang einer Linie berührt, steuerbar ist.

b) das Abkühlen gleichzeitig mit dem Perforieren durch eine Kühlung der Gegenwalze (3) und zusätzlich durch einen Luftstrom erfolgt, der durch die beim Perforieren entstehenden Löcher aufgrund des Unterdrucks strömt, wobei der Luftstrom ebenfalls von außen durch die Gegenwalze (3) steuerbar ist.

2. Verfahren nach Anspruch 1, dadurch gekennzeichnet, daß die Folie wenigstens annähernd in den Spalt zwischen siebartiger Fläche und Gegenwalze (3) extrudiert wird.

3. Verfahren nach Anspruch 2, dadurch gekennzeichnet, daß die Gegenwalze (3) in Bezug auf den Bereich des pneumatischen Unterdrucks an der siebartigen Fläche verstellbar ist.

4. Verfahren nach Anspruch 2, dadurch gekennzeichnet, daß der Bereich des pneumatischen Unterdrucks in seiner Lage in Bezug auf die Gegenwalze (3) verstellt werden kann.

5. Verfahren nach Anspruch 1, dadurch gekennzeichnet, daß die siebartige Fläche mit einer Strukturierung versehen ist und die Folie (2) an dieser Fläche sowohl perforiert als auch strukturiert wird.

6. Verfahren nach Anspruch 1, dadurch gekennzeichnet, daß an der siebartigen Fläche in Laufrichtung hinter dem pneumatischen Unterdruck ein Bereich mit pneumatischem Überdruck auf der der Folie abgewandten Seite vorgesehen ist.

7. Verfahren nach Anspruch 6, dadurch gekennzeichnet, daß im Bereich des pneumatischen Überdrucks an der Außenseite ein Wasserbad (10) vorgesehen ist, durch welches die perforierte Folie zu ihrer Kühlung läuft, wobei der pneumatische Überdruck ein Eindringen von Wasser in wenigstens die siebartige Fläche verhindert.

### Claims

1. Process for the manufacture of a perforated and preferably textured soft plastic film which is perforated and then cooled on a sievelike surface under the influence of a pneumatic vacuum in a thermoplastic state on leaving an extruder die (1), wherein

a) the vacuum can be controlled from outside by a back-up roller (3), which touches the sievelike surface along a line,

b) the cooling of the film is carried out at the same time as the perforating operation by cooling the back-up roller (3) as well as by a stream of air that is sucked through the holes produced in the perforating operation under the influence of the vacuum, the stream of air also being controllable from outside by the back-up roller (3).

2. A process according to claim 1, wherein the film is extruded at least approximately into the gap between the sievelike surface and the back-up roller (3).

3. A process according to claim 2, wherein the back-up roller (3) can be adjusted in relation to the area of the pneumatic vacuum on the sievelike surface.

4. A process according to claim 2, wherein the position of the area of the pneumatic vacuum can be adjusted in relation to the back-up roller (3).

5. A process according to claim 1, wherein the sievelike surface is patterned and the film (2) is both perforated and textured on this surface.

6. A process according to claim 1, wherein there is an area with pneumatic overpressure inside the sievelike surface in machine direction behind the pneumatic vacuum.

7. A process according to claim 6, wherein a water bath (10) through which the perforated film is fed for cooling purposes, is located outside the roller in the area of pneumatic overpressure, which prevents water from penetrating at least the sievelike surface.

### Revendications

1. Procédé pour la fabrication d'une feuille perforée et de préférence structurée en matière plastique flexible, dont la perforation et le refroidissement consécutif s'effectuent à l'état thermoplastique à la sortie d'une buse d'extrusion sur une surface similaire à un tamis sous l'action d'une dépression pneumatique, caractérisé par le fait que

a) la dépression peut être réglée de l'extérieur au moyen d'un contre-cylindre (3) qui est en contact avec la surface similaire à un tamis le long d'une ligne ;

b) le refroidissement s'effectue simultanément à la perforation au moyen d'un refroidissement du contre-cylindre (3) et accessoirement au moyen d'un courant-d'air qui passe à travers les trous produits par la perforation suite à la présence de la dépression, ledit courant-d'air étant lui aussi réglable de l'extérieur au moyen du contre-cylindre (3).

2. Procédé selon la revendication 1, caractérisé par le fait que la feuille est extrudée au moins de manière approximative dans la fente existant entre la surface similaire à un tamis et le contre-cylindre (3).

3. Procédé selon la revendication 2, caractérisé par le fait que le contre-cylindre (3) peut être réglé par rapport à la zone de la surface similaire à un tamis sur laquelle s'exerce la dépression pneumatique.

4. Procédé selon la revendication 2, caractérisé par le fait que la zone sur laquelle s'exerce la dépression pneumatique peut être déplacée en ce qui concerne sa position par rapport au contre-cylindre (3).

5. Procédé selon la revendication 1, caractérisé par le fait que la surface similaire à un tamis est munie d'une structuration et que la feuille (2) subit tant une perforation qu'une structuration en passant sur cette surface.

6. Procédé selon la revendication 1, caractérisé par le fait que sur la surface similaire à un tamis, dans le sens du passage, derrière la dépression pneumatique, est prévue une zone à surpression pneumatique sur le côté opposé à la feuille.

7. Procédé selon la revendication 6, caractérisé par le fait que dans la zone de la surpression pneumatique est prévu, sur le côté extérieur, un bain d'eau (10) à travers lequel la feuille perforée passe en vue d'être refroidie, la surpression pneumatique empêchant toute pénétration d'eau au moins dans la surface similaire à un tamis.

Fig.1.

Fig.2.

## Fig.3.

## Fig.4.